# EUROPEAN PATENT APPLICATION

(11) **EP 2 913 088 A1**
(43) Date of publication of application: **02.09.2015**
(21) Application number: 14193562.7
(22) Date of filing: 17.11.2014
(51) Int. Cl.: A63H 17/00

(54) **A telescopic rope device for a swing car**

(30) Priority: 27.02.2014 CN 201420085260 U
(71) Applicant: ZheJiang JinBang Sports Equipment Co., Ltd., Zhejiang 321404 (CN)
(72) Inventor: Xu, YongQiang, LiShui City, 321404 Zhejiang (CN)
(74) Representative: Lang, Christian

(57) **Abstract**

The present application is directed to a telescopic rope device for a swing car, which comprising a case and a fixed block. A rotatable guide rail with a hollow cylindrical structure is set within the case. The case comprises a front cover and a back cover. Threaded holes are set on the front cover, and another threaded holes are set on the back cover and the fixed block respectively, corresponding to the threaded holes on the front cover. The front cover, the back cover and the fixed block are conjoint by the thread holes and matched screws. A resettable shrapnel is set inside of the rotatable guide rail. The resettable shrapnel is fixedly connected with the back cover. A spiral wound rope is set on the outside of the rotatable guide rail. The rope has a free end, and an opening is set on the front cover and the back cover corresponding to the free end of the rop, the free end of the rope extends out of the opening.

## Description

### CROSS-REFERENCE TO RELATED APPLICATIONS

The present application claims priority based on Chinese Application No. 201420085260.9 filed on Feb.27, 2014*,* the disclosure of which is hereby incorporated by reference in its entirety.

### TECHNICAL FIELD

The present application relates to toys, and particular to a telescopic rope device for a swing car.

### BACKGROUND

In the existing technology, the swing car as a simple children's toys only depend on steering wheel rotation controlling swing car running, without other device for providing power, the function and the structure of the existing swing car are simple .

### SUMMARY

The present application is directed to a telescopic rope device for a swing car, which comprising a case and a fixed block. A rotatable guide rail with a hollow cylindrical structure is set within the case. The case comprises a front cover and a back cover. Threaded holes are set on the front cover, and another threaded holes are set on the back cover and the fixed block respectively, corresponding to the threaded holes on the front cover. The front cover, the back cover and the fixed block are conjoint by the thread holes and matched screws. A resettable shrapnel is set inside of the rotatable guide rail. The resettable shrapnel is fixedly connected with the back cover. A spiral wound rope is set on the outside of the rotatable guide rail. The rope has a free end, and an opening is set on the front cover and the back cover corresponding to the free end of the rop, the free end of the rope extends out of the opening.

Furthermore, both ends of the rotatable guide rail are equipped with an annular fixed plate respectively.

Furthermore, the rope is closely sheathed on the outside of the rotatable guide rail.

Furthermore, a lateral wall of the resettable shrapnel is closely fitted with the inside wall of the rotatable guide rail.

It is to be understood that both the foregoing general description and the following detailed description are exemplary only and are not necessarily restrictive of the disclosure as claimed. The accompanying drawings, which are incorporated in and constitute a part of the specification, illustrate an embodiment of the disclosure and together with the general description, serve to explain the principle of the disclosure.

### BRIEF DESCRIPTION OF THE DRAWINGS

The numerous advantages of the present application may be better understood by those skilled in the art by reference to the accompanying figures in which:
Fig.1 is an structure schematic drawing of a telescopic rope device for a swing car according to the present application;
Fig.2 is an exploded view of the tool holder of a telescopic rope device for a swing car according to the present application; and
Fig.3 is an assembly schematic of a telescopic rope device for a swing car according to the present application.

### DETAILED DESCRIPTION

Reference will now be made in detail to the subject matter disclosed, which is illustrated in the accompanying drawings.

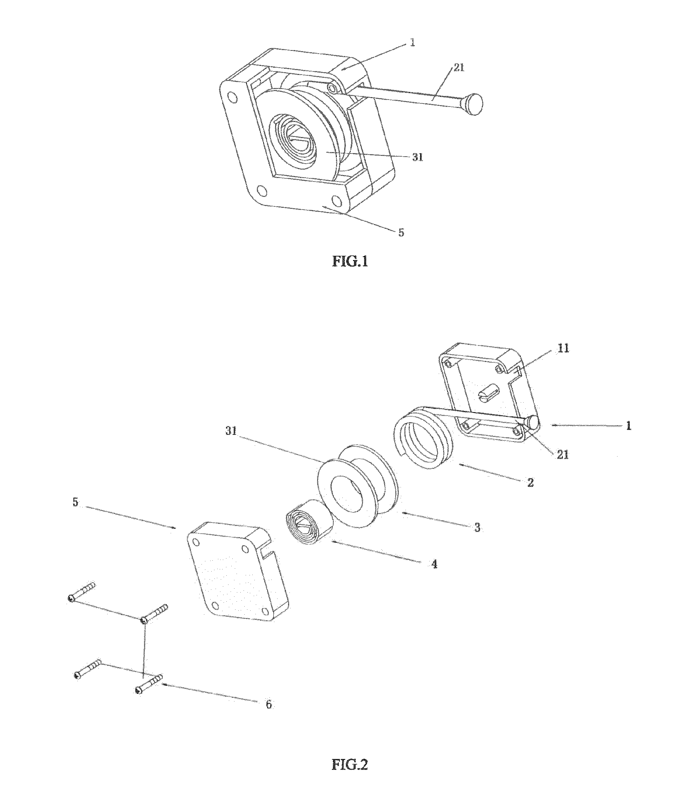

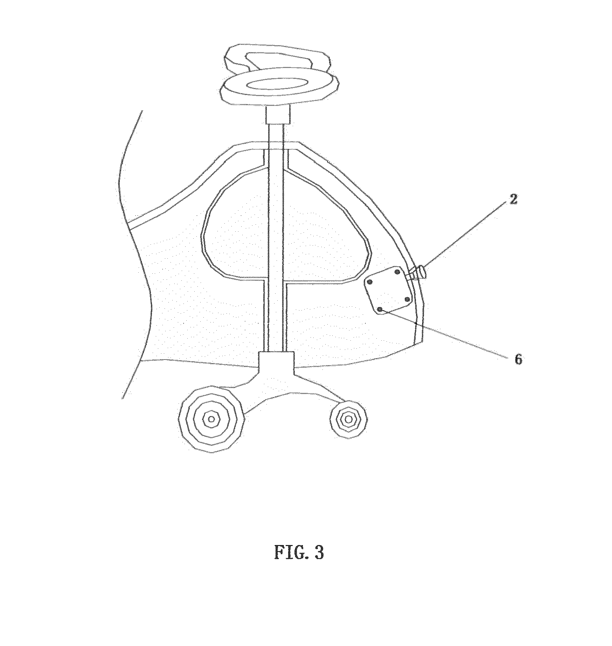

Referring to Fig. 1 to Fig. 3, the present application provides a telescopic rope device for a swing car, which comprising a case and a fixed block. A rotatable guide rail 3 with a hollow cylindrical structure is set within the case. The case comprises a front cover 1 and a back cover 5. Threaded holes are set on the front cover 1, and another threaded holes are set on the back cover 5 and the fixed block respectively, corresponding to the threaded holes on the front cover 1.The front cover 1, the back cover 5 and the fixed block are conjoint by the thread holes and matched screws 6. A resettable shrapnel 4 is set inside of the rotatable guide rail 3. The resettable shrapnel 4 is fixedly connected with the back cover 5. A spiral wound rope 2 is set on the outside of the rotatable guide rail 3.The rope 2 has a free end 21, and an opening 11 is set on the front cover 1 and the back cover 5 corresponding to the free end 21 of the rop 2, the free end 21 of the rope 2 extends out of the opening 11.

Both ends of the rotatable guide rail 3 are equipped with an annular fixed plate respectively. The rope 2 is closely sheathed on the outside of the rotatable guide rail 3.Furthermore, a lateral wall of the resettable shrapnel 4 is closely fitted with the inside wall of the rotatable guide rail 3.

In use, pulling the rope 2, then the rotatable guide rail 3 starts running, and then the winding coil number of resettable shrapnel 4 is increased, in order to store elastic potential energy, and then loosen the rope 2, elastic potential energy stored in the resettable shrapnel 4 is transformed to kinetic energy, and then the rotatable guide rail 3 is rotated to the opposite direction, the rope 2 achieve its function.

## Claims

1. A telescopic rope device for a swing car, which comprising:
a case, a rotatable guide rail with a hollow cylindrical structure is set within the case, the case comprises a front cover and a back cover, threaded holes are set on the front cover, and another threaded holes are set on the back cover and the fixed block respectively, corresponding to the threaded holes on the front cover; and
a fixed block,
wherein the front cover, the back cover and the fixed block are conjoint by the thread holes and matched screws, a resettable shrapnel is set inside of the rotatable guide rail, the resettable shrapnel is fixedly connected with the back cover; a spiral wound rope is set on the outside of the rotatable guide rail, the rope has a free end, and an opening is set on the front cover and the back cover corresponding to the free end of the rop, the free end of the rope extends out of the opening.

2. The telescopic rope device as set forth in claim 1, wherein both ends of the rotatable guide rail are equipped with an annular fixed plate respectively.

3. The telescopic rope device as set forth in claim 2, wherein the rope is closely sheathed on the outside of the rotatable guide rail.

4. The telescopic rope device as set forth in claim 3, wherein a lateral wall of the resettable shrapnel is closely fitted with the inside wall of the rotatable guide rail.
